# EUROPÄISCHE PATENTSCHRIFT

(11) **EP 0 902 291 B1**
(45) Veröffentlichungstag und Bekanntmachung des Hinweises auf die Patenterteilung: **02.05.2003**
(21) Anmeldenummer: 98115799.3
(22) Anmeldetag: 21.08.1998
(51) Int. Cl.: G01P 3/44

(54) **Radlager für Fahrzeuge mit ABS**
Wheel bearing for vehicles with ABS
Palier de roue pour véhicules équipés de l'ABS

(30) Priorität: 09.09.1997 DE 19739452
(43) Veröffentlichungstag der Anmeldung: 17.03.1999
(73) Patentinhaber: SKF GmbH, 97421 Schweinfurt (DE)
(72) Erfinder: Huhn, Norbert, 97440 Werneck (DE)
(74) Vertreter: Gosdin, Michael, Dr.

(56) Entgegenhaltungen:
- EP-A- 0 657 738
- US-A- 4 669 895

## Beschreibung

Die Erfindung betrifft ein Radlager nach dem Oberbegriff des Hauptanspruches.

Durch die EP 0 657 738 A1 ist bereits ein solches Radlager bekannt. Es ist mit einer Kombination aus Kassettendichtung und Impulsring versehen, wobei der L-förmig profilierte Impulsring in den drehenden Abschnitt der Kassettendichtung eingesetzt ist. Die Kassettendichtung selbst ist mit zwei radial anlaufenden Dichtlippen versehen.

Durch die koaxial ineinander verschachtelte Anordnung von drehendem Abschnitt und Impulsring werden bei dieser Ausführung hohe Anforderungen an die Toleranzen, insbesondere beim Durchmesser und bei der Wanddicke der Bauteile gestellt, die in der Serie nur mit erhöhtem Kostenaufwand zu verwirklichen sind.

Aufgabe der Erfindung ist es, ein Radlager der eingangs genannten Art zu schaffen, dessen Kassettendichtung und Impulsring preiswert herstellbar sind und in der Serie problemlos einzubauen sind.

Die Aufgabe wird dadurch gelöst, daß der durch die Schrägstellung der Rollen axial längere Bauabschnitt am betreffenden Lagerring den zu den Rollen gerichteten, freien Schenkel des im Profil L-förmigen, drehenden Abschnittes der Kassettendichtung und im Anschluß daran den von der Seitenfläche des Lagerringes zum Lagerinneren gerichteten, freien Schenkel des L-förmig profilierten Impulsringes aufnimmt und der axial kürzere Bauabschnitt am anderen Lagerring den zum Lagerinneren gerichteten freien Schenkel des im Profil L-förmigen, stillstehenden Abschnittes der Kassettendichtung trägt mit axial zwischen den radialen Schenkeln von drehendem Abschnitt der Kassettendichtung und vom Impulsring angeordnetem radialen Schenkel.

Diese erfindungsgemäße Lösung nutzt den gesamten axialen Bauraum am Außenring eines zweireihigen Schrägrollenlagers in O-Anordnung aus. Auf diese Weise entsteht eine Nebeneinanderanordnung von Impulsring und äußerem, drehenden Abschnitt der Kassettendichtung. Der stillstehende Abschnitt ist demgegenüber axial dazwischenliegend in dem erheblich schmaleren, axialen Bauraum des Innenringes angeordnet. Dadurch sind beide Bauräume optimal ausgenützt.

Vorteilhafterweise addieren sich nicht die Toleranzen der Einzelteile, so daß bei deren Fertigung preisgünstiger gearbeitet werden kann. Gleichzeitig erhöht sich auch die Zuverlässigkeit der Befestigung, da mit überschaubaren Preßpaarungen gearbeitet werden kann.

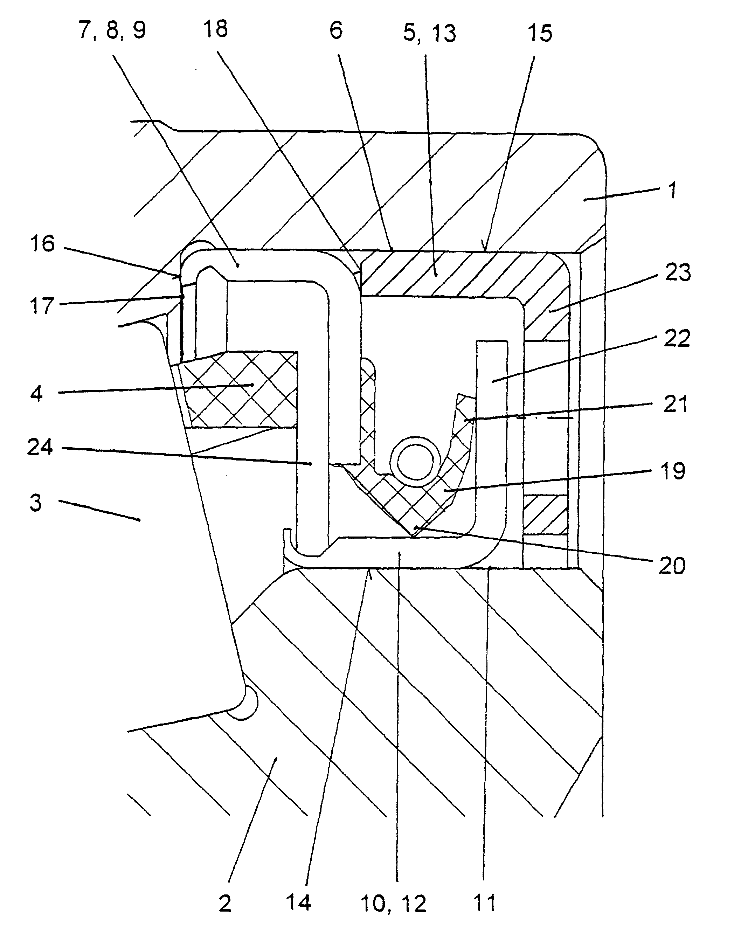

Diese und weitere Merkmale werden nachfolgend an dem in der Zeichnung dargestellten Beispiel beschrieben.

Die einzige Figur zeigt den teilweisen Längsschnitt eines Kegelrollenlagers mit Kassettendichtung und Impulsring.

Das Kegelrollenlager ist in O-Konfiguration angeordnet und besteht aus einem Außenring 1, einem Innenring 2, dazwischen angeordneten Kegelrollen 3 und einem Käfig 4. Der Lagerraum ist durch eine Kassettendichtung geschützt, an die sich ein Impulsring 5 anschließt. Durch die O-Anordnung ergibt sich am Außenring 1 ein breiterer Bauraum bzw. Sitzfläche 6 als am Innenring 2.

Der äußere, drehende Abschnitt 7 der Kassettendichtung weist einen L-förmig profilierten Tragkörper 8 aus Blech auf, dessen axialer Schenkel 9 zum Lagerinneren gerichtet ist und teilweise den Käfig 4 überdeckt. Dadurch wird unter Ausnutzung des größeren Bauraumes am Außenring 1 nur ein geringer Teil des Bauraumes am Innenring 2 belegt, so daß für den Einbau des stillstehenden, inneren Abschnittes 10 der Kassettendichtung eine ausreichend breite Sitzfläche 11 zur Verfügung steht.

Diese spezielle Anordnung erlaubt es, den ebenfalls L-förmig profilierten Impulsring 5 auf die Sitzfläche 6 im Anschluß an den drehenden Abschnitt 7 der Kassettendichtung einzupressen. Dabei ergeben sich keinerlei Platzprobleme. Durch die ausreichend breiten axialen Schenkel 9, 12, 13 aller drei Blechkomponenten 5, 7, 10 ist eine zuverlässige Befestigung gegeben. Bei der Fertigung dieser Komponenten 5, 7, 10 muß nur deren zylindrische Seitenfläche 14, 15 mit entsprechender Paarungstoleranz gefertigt werden. Die Wandstärke und deren Toleranz geht dabei nicht ein. Beim Einbau werden die Komponenten 5, 7, 10 in der Reihenfolge drehender Abschnitt 7, stillstehender Abschnitt 10 der Kassettendichtung, Impulsring 5 eingepreßt. Die Stirnseite 16 des drehenden Abschnittes 7 liegt dabei an einer Bordfläche 17 des Außenringes 1 an, während die Stirnseite 18 des axialen Schenkels des Impulsringes 5 auf den stillstehenden Abschnitt 10 aufgepreßt wird.

Am radialen Schenkel 24 des drehenden Abschnittes 7 ist ein Dichtungselement 19 anvulkanisiert, das mit einer radialen Dichtlippe 20 am axialen Schenkel 12 und mit einer axialen Dichtlippe 21 am radialen Schenkel 22 des stillstehenden Abschnittes 10 anläuft.

## Patentansprüche

1. Radlager für Fahrzeuge mit ABS mit einem zweireihigen Schrägrollenlager mit mindestens einerseits angeordneter Kassettendichtung und angebautem Impulsrad, in dem der durch die Schrägstellung der Rollen (3) axial längere Bauabschnitt (6) am betreffenden Lagerring (1) den zu den Rollen (3) gerichteten freien Schenkel (9) des im Profil L-förmigen, drehenden Abschnittes (7) der Kassettendichtung und im Anschluß daran den von der Seitenfläche des Lagerringes (1) zum Lagerinneren gerichteten, freien Schenkel (13) des L-förmig profilierten Impulsringes (5) aufnimmt und der axial kürzere Bauabschnitt (11) am anderen Lagerring (2) den zum Lagerinneren gerichteten, freien Schenkel (12) des im Profil L-förmigen, stillstehenden Abschnittes (10) der Kassettendichtung trägt, wobei der radiale Schenkel (22) des stillstehenden Abschnittes (10) der Kassettendichtung axial zwischen den radialen Schenkeln (23, 24) des drehenden Abschnittes (7) der Kassettendichtung und des Impulsringes (5) angeordnetet ist.

2. Radlager nach Anspruch 1, **dadurch gekennzeichnet, daß** das Dichtungselement (19) am radialen Schenkel (24) des drehenden Abschnittes (7) befestigt ist und mit je einer Dichtlippe (20, 21) radial und axial an den betreffenden Schenkeln (12, 22) des stillstehenden Abschnittes (10) der Kassettendichtung anläuft.

3. Radlager nach Anspruch 1 oder 2, **dadurch gekennzeichnet, daß** die Stirnseite (18) des zum Lagerinneren verlaufenden Schenkels (13) des Impulsringes (5) am drehenden Abschnitt (7) der Kassettendichtung anliegt.

4. Radlager nach einem der vorangehenden Ansprüche, **dadurch gekennzeichnet, daß** die radialen Schenkel (22, 23) des Impulsringes (5) und des stillstehenden Abschnittes (10) der Kassettendichtung bis auf einen Sicherheitsabstand nebeneinander angeordnet sind.

## Claims

1. A wheel bearing for vehicles with ABS comprising a double-row angular roller bearing having a cartridge seal arranged on at least one side and an attached encoder wheel, wherein the installation portion (6) of the relevant bearing race (1) which is axially longer owing to the oblique disposition of the rollers (3) receives, facing the rollers (3), the free flange (9) of the L-profiled rotating portion (7) of the cartridge seal and receives adjacent therto the free flange (13) of the L-shaped, profiled encoder ring (5) facing towards the interior of the bearing from the lateral face of the bearing race (1), and the axially shorter installation portion (11) of the other bearing race (2) carries the free flange (12) of the L-profiled, stationary portion (10) of the cartridge seal facing towards the interior of the bearing, the radial flange (22) of the stationary portion (10) of the cartridge seal being arranged axially between the radial flanges (23, 24) of the rotating portion (7) of the cartridge seal and of the encoder ring (5).

2. A wheel bearing according to Claim 1, **characterised in that** the. sealing element (19) is fixed to the radial flange (24) of the rotating portion (7) and has one sealing lip (20) which runs radially and one sealing lip (21) which runs axially against the corresponding flanges (12, 22) of the stationary portion (10) of the cartridge seal.

3. A wheel bearing according to Claim 1 or 2, **characterised in that** the end face (18) of the flange (13) of the encoder ring (5) oriented towards the interior of the bearing abuts the rotating portion (7) of the cartridge seal.

4. A wheel bearing according to one of the preceding claims, **characterised in that** the radial flanges (22, 23) of the encoder ring (5) and of the stationary portion (10) of the cartridge seal are arranged adjacently except for a safety clearance.

## Revendications

1. Palier de roue pour véhicules équipés de I'ABS, avec un roulement à deux rangées de rouleaux obliques, avec monté d'un côté au moins un joint de type à cassette et une bague à impulsions intégrée, dans lequel la portion (6) plus longue dans la direction axiale du fait de l'inclinaison des rouleaux (3) de la bague de roulement (1) concernée reçoit l'aile (9) libre tournée vers les rouleaux (3) de la partie tournante (7), à profil en L, du joint à cassette ainsi que l'aile libre (13) de la bague à impulsions (5) à profil en L qui s'étend depuis la face latérale de la bague de roulement (1) vers l'intérieur du palier, et dans lequel la portion (11) plus courte dans la direction axiale de l'autre bague de roulement (2) porte l'aile (12) libre tournée vers l'intérieur du palier de la partie fixe (10) à profil en L du joint à cassette, l'aile radiale (22) de la partie fixe (10) du joint à cassette étant disposée axialement entre les ailes radiales (23, 24) de la partie tournante (7) du joint à cassette et de la bague à impulsions (5).

2. Roulement de roue selon la revendication 1, **caractérisé en ce que** l'élément d'étanchéité (19) est fixé à l'aile (24) radiale de la partie tournante (7) et glisse radialement et axialement avec une lèvre d'étanchéité (20, 21) sur l'aile (12, 22) concernée de la partie fixe (10) du joint à cassette.

3. Roulement de roue selon la revendication 1 ou 2, **caractérisé en ce que** la face frontale (18) de l'aile (13) de la bague à impulsions (5) s'étendant en direction de l'intérieur du palier est en appui sur la partie tournante (7) du joint à cassette.

4. Roulement de que selon une des revendications précédentes, **caractérisé en ce que** les ailes radiales (22, 23) de la bague à impulsions (5) et de la partie fixe (10) du joint à cassette sont disposées côte à côte abstraction faite d'une distance de sécurité.
